# EUROPEAN PATENT APPLICATION

(11) **EP 4 420 944 A1**
(43) Date of publication of application: **28.08.2024**
(21) Application number: 23158375.8
(22) Date of filing: 24.02.2023
(51) Int. Cl.: B60T 17/00

(54) **A FILTER ASSEMBLY FOR A COMPRESSED AIR TREATMENT SYSTEM OF A VEHICLE**

(71) Applicant: KNORR-BREMSE Systeme für Nutzfahrzeuge GmbH, 80809 München (DE)
(72) Inventor: TOTH, Zoltan Laszlo, 6100 Kiskunfélegyháza (HU); POLYAK, Tibor, 6044 Hetényegyháza (HU); OLAH, Tibor, 6000 Kecskemét (HU)

(57) **Abstract**

A filter assembly (100) for a compressed air treatment system of a vehicle, comprising an air dryer cartridge (102) configured to be removably secured onto an air treatment device, the air treatment device (102) comprising a housing including a peripheral portion and a central portion, wherein the central portion includes a central wall (110) defining an outer wall surface, the air dryer cartridge (102) comprising a flange base portion (112) and a flange neck portion (114), wherein the flange neck portion (114) includes a flange wall (116) extending from the flange base portion (112) and defining an inner neck surface, the flange neck portion (114) being configured to be mounted onto the central portion (108) of the housing of the air treatment device such that the inner neck surface faces towards the outer wall surface of the central wall (110), the filter assembly further comprising a guiding element that is included in the flange neck portion (114) of the air dryer cartridge (102) or on the central wall (110) of the air treatment device, wherein the guiding element (118) is configured to guide the flange neck portion (114) onto the central wall (110) of the air treatment device up to a defined end position.

## Description

The present invention relates to a filter assembly for a compressed air treatment system of vehicle, especially for utility vehicles.

The compressed air treatment systems are commonly used in brake systems and air suspension systems of vehicles, e.g. the utility vehicles such as trucks. Such compressed air treatment systems typically comprise a disposable air dryer cartridge mounted onto an air dryer treatment device.

EP 2 448 801 A1 discloses an air dryer cartridge for a compressed air treatment system of a vehicle, comprising a spring cover and a carrier element, which together define a volume of the air dryer cartridge in the assembled state of the air dryer cartridge, wherein a desiccant box arranged inside the volume and filled with a desiccant.

EP 3 433 001 B1 discloses securing means in the form of a bayonet lock. The securing means comprises a plurality of fastening means provided on a filter element that can be secured to a plurality of head pins provided on a filter module. The fastening means have a specific arc-shaped guide grooves including inclined portions having an upward gradient towards a latching contour.

The assembling and disassembling of the air dryer cartridges without deteriorating the performance of filtering process and/or damaging sealing elements utilized in the compressed air treatment systems is a delicate and time-consuming task.

It is therefore an object of the present invention to provide for an improved filter assembly for a compressed air treatment system. In particular, in that the filter assembly enables a reliable and easy assembling and disassembling of an air dryer cartridge onto an air dryer treatment device. Advantageously, the air dryer cartridge can quickly be secured in an accurate manner without creating unbalanced loads within the filter assembly and without the use of advanced tools.

This object is achieved in the present invention by a filter assembly for a compressed air treatment system of a vehicle according to claim 1. Accordingly, the filter assembly comprises an air dryer cartridge that is configured to be removably secured onto an air treatment device. The air treatment device comprises a housing including a peripheral portion and a central portion, wherein the central portion includes a central wall that defines an outer wall surface. The air dryer cartridge comprises a flange base portion and a flange neck portion, wherein the flange neck portion includes a flange wall extending from the flange base portion and defining an inner neck surface. The flange neck portion is configured to (e.g. slidably) be mounted onto the central portion of the housing of the air treatment device such that the inner neck surface faces towards the outer wall surface of the central wall. The filter assembly further comprises a guiding element that is included in the flange neck portion of the air dryer cartridge or on the central wall of the air treatment device. The guiding element is configured to guide the flange neck portion onto the central wall of the air treatment device up to a defined end position.

The invention is based on the basic idea that a filter assembly for a compressed air system of vehicle is provided that can be assembled and disassembled in an accurate and reliable manner. The filter assembly comprises an air dryer cartridge that can easily be secured onto an air treatments device and removed therefrom.

The air treatment device comprises a housing includes a peripheral portion and a central portion having a central wall. The air dryer cartridge comprises a flange neck portion having a flange wall extending from a flange base portion. The air dryer cartridge includes a guiding element provided in the flange neck portion of the air dryer cartridge or on the central wall of the air treatment device for a uniform guidance of its movements (e.g. sliding movements or rotation) of the flange neck portion onto the central wall of the air treatment device. In this way an easy and reliable mounting (or demounting) of the filter assembly is facilitated. In particular, the precision in assembling and disassembling of the filter assembly has been improved in a less complex manner and without employing advanced mechanical tools. Further, it is possible to avoid creation of excess or unbalanced loads in the filter assembly during the assembling process.

In particular, the air dryer cartridge and the air treatment device are symmetrically arranged with respect to a central axis. The air dryer cartridge is advantageously configured to move (rotate or slide) onto the central wall of the air treatment device and to rotate thereon in a movement direction around the central axis up to a defined end position.

In particular, the filter assembly further comprises a tab element that is included on the central wall or in the flange neck portion. Advantageously, the tab element is configured to engage with (or contact or slide or move) on the guiding element. In this way, a precise assembly/mounting of the air dryer cartridge on to the air treatment device can be achieved in a simple manner, e.g. without a need for special tools.

In particular, the guiding element comprises at least two grooved surfaces (e.g. cut-out surfaces) for example with curved boundaries that are arranged around the central axis of the filter assembly. Such grooved surfaces with a defined shape and dimension can easily be created onto the walls of the filter assembly using techniques such as milling or embossing.

In particular, the tab element comprises at least two projections that are arranged around the central axis of the filter assembly (e.g. symmetrically or asymmetric). Advantageously, the at least two projections of the tab element are configured, for example to smoothly slide or move on the corresponding grooved surfaces of the guiding element. In this way the relative movement of the air dryer cartridges on to the air treatment device can easily and uniformly be controlled.

In particular, the flange neck portion further comprises an insert element including an insert wall that is configured to be fitted within the flange wall of the flange neck portion, wherein the insert wall defines an insert inner surface and an insert outer surface. Advantageously, the insert outer surface is configured to be connected to the inner neck surface of the flange wall, and the insert inner surface is configured to be engaged with the outer wall surface of the central wall.

In particular, the inner surface of the flange wall comprises a plurality of grooved channels configured to receive a plurality of projected channels included on the insert outer surface, wherein the plurality of the grooved channels and the plurality of projected channels are arranged around the central axis of the filter assembly and extend in a direction in parallel thereto. In this way, the insert elements of various dimension or shape of insert inner surfaces can uniformly be mounted via the outer surface onto the flange wall.

In particular, the guiding element can be included on the inner neck surface of the flange wall, on the insert inner surface of the insert wall or on the outer wall surface of the central wall.

In particular, the guiding element is included on the inner neck surface of the flange wall or on the insert inner surface of the insert wall. Advantageously, the tab element is formed by a pin that is configured to extend through two through-holes formed onto the central wall of the air treatment device. The tab element is preferably configured to removably be secured within the through-holes with its ends projecting from the outer surface of the central wall. More advantageously, the projecting ends of the pin are configured to engage with (e.g. smoothly slide on) the grooved surfaces provided on the inner neck surface or on the insert inner surface of the air dryer cartridge.

Alternatively, the guiding element is included on the outer wall surface of the central wall. In particular, the tab element is formed on the inner surface of the flange wall of the air dryer cartridge. Preferably, the tab element comprises at least two projections that are projecting inwardly from the inner neck surface. Advantageously, these projections are configured to engage with the corresponding grooved surfaces provided on the outer surface of the central wall of the air treatment device.

In particular, by way of the above options, the design and structural features of filter assembly, i.e. the air dryer cartridge and the air treatment device can be varied as required without jeopardizing the reliability of the filtering performance or the practicability of its design.

In particular, in cases where the guiding element is included in the air treatment device, i.e. on the outer surface of the central wall, the filter assembly further comprises a fixing element for locking relative movements of the flange neck portion of the air dryer cartridge with respect to the central portion of the air treatment device.

Advantageously, the central wall of the air treatment device includes at least holes (e.g. two blind-holes) that are formed onto the outer surface of the central wall, and the flange wall of the air dryer cartridge includes at least two through-holes that are formed onto the flange wall (e.g. opposite sides of the flange wall). In particular, the fixing element comprises at least two pins, each being configured to be inserted into a through-hole of the flange wall and a corresponding hole or blind-hole of the central wall. The pins are further configured to removably be secured in the holes of the flange wall and the central wall. In this way the air dryer cartridge is advantageously further secured/fixed onto the air treatment device.

Preferably, pins are metal pins, e.g. stainless steel roll pins or spring pins.

In particular, the flange base portion comprises a plurality of openings configured to be engaged with a corresponding plurality of pin elements that are included in the housing of the air treatment device when mounting the flange neck portion onto the central portion of the housing.

For example, the plurality of openings includes three openings arranged around the central axis of the filter assembly, and the plurality of pin elements includes three pin elements that are arranged around the central axis of the filter assembly.

In particular, each of the plurality of openings define a curved opening on the flange base portion and have a first end and a second end. The second end comprises a thickened contour, preferably in the shape of a horseshoe, for contacting with (engaging with) the corresponding pin element of the air treatment device. Advantageously, the pin elements are held at the second ends of the openings, resulting in an easier handling, and fixing of the air dryer cartridge onto the air treatment device.

In particular, the pin elements include for example a pin, a threaded pin, a screw or a nail.

In particular, the insert wall comprises a first circumferential shoulder configured to receive a first sealing element on the outer insert surface. In addition, the insert wall may comprise a second circumferential shoulder configured to receive a fixing element on the outer insert surface. Additionally, or alternatively, the central wall of the air treatment device comprises a third circumferential shoulder configured to receive a second sealing element on the outer wall surface.

The provision of the shoulders on the insert wall and/or on the central wall for receiving the sealing elements, such as sealing rings or O rings, advantageously provides for an easy servicing in that no seaming or retightening or mechanical tools are required.

In particular, by way of the fixing element, e.g. or Seeger ring, it is possible to better position and secure the insert element on the flange wall.

Further details and advantages of the present invention shall now be disclosed in an embodiment according to the invention in connection with the drawings.

It is shown in
- **Fig. 1**: a schematic partial cross-sectional view of a known filter assembly of a compressed air treatment system of a vehicle;
- **Fig. 2**: a schematic partial view of a flange base portion of an air dryer cartridge of a filter assembly according to the present invention;
- **Fig. 3**: schematic partial views an air treatment device in unassembled and assembled states of a filter assembly according to the present invention;
- **Fig. 4**: schematic partial views of a flange neck portion of a filter assembly according to the present invention;
- **Fig. 5**: a schematic partial exploded-view of a flange neck portion and a central wall of a filter assembly according to the present invention;
- **Fig. 6**: a schematic partial view a filter assembly in an assembled state according to the present invention.

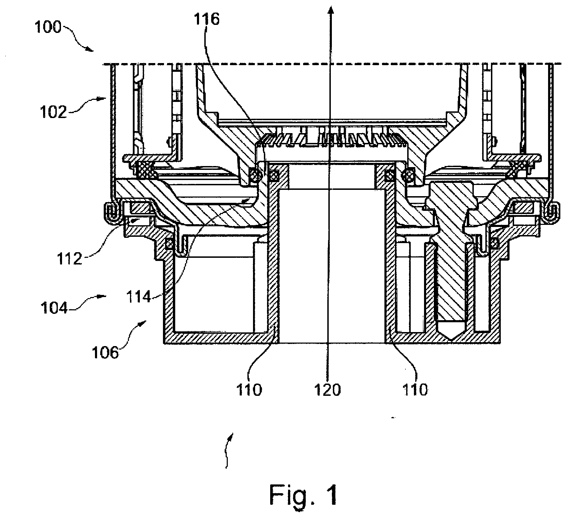

In **Fig. 1** a schematic partial cross-sectional view of a known filter assembly 100 of a compressed air treatment system of a vehicle, e.g. a utility vehicle, is shown.

The filter assembly 100 comprises an air dryer cartridge 102 and an air treatment device 104. The air dryer cartridge 102 is configured to be removably secured onto the air treatment device 104.

The air treatment device 104 comprises a housing that includes a peripheral portion 106 and a central portion 108. The central portion 108 includes a central wall 110 (e.g. a hollow cylindrical wall) defining an outer wall surface (not visible in **Fig. 1**).

The air dryer cartridge 102 comprises a flange base portion 112 and a flange neck portion 114 (e.g. a hollow cylindrical portion). The flange neck portion includes a flange wall 116 which extends from the flange base portion 112 along a central axis 120 (i.e. in a direction towards interior of the air dryer cartridge). The flange wall 116 defines an inner neck surface (not visible in **Fig. 1**).

The flange neck portion 114 is configured to be mounted onto the central portion 108 of the housing of the air treatment device 104 such that the inner neck surface faces towards the outer wall surface of the central wall 110.

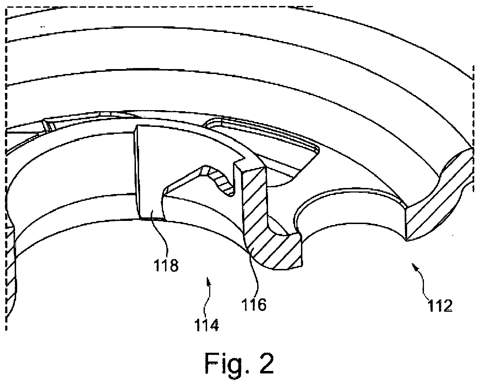

**Fig. 2** illustrates a schematic partial view of a flange base portion 112 of an air dryer cartridge 102 of a filter assembly according to the present invention.

In the filter assembly according to the present invention, a guiding element 118 is provided.

The guiding element 118 advantageously serves the purpose of an accurate guidance of the movements of the flange neck portion onto the central wall up to an end position that is defined by the guiding element, e.g. by its geometry, dimension or boundary.

The guiding element 114 includes advantageously at least two grooved surfaces included in the flange neck portion 114 or on the central wall 110. The grooved surfaces (i.e. the cut-out surfaces), for example have curved boundaries and are symmetrically arranged around the central axis 120 of the filter assembly.

The grooved surfaces can be for example created by milling or embossing techniques.

In **Fig. 2****,** one of the grooved surfaces is shown in the flange neck portion 114 of the air dryer cartridge 102. In particular, the guiding element 118 is formed on the inner neck surface of the flange wall 116.

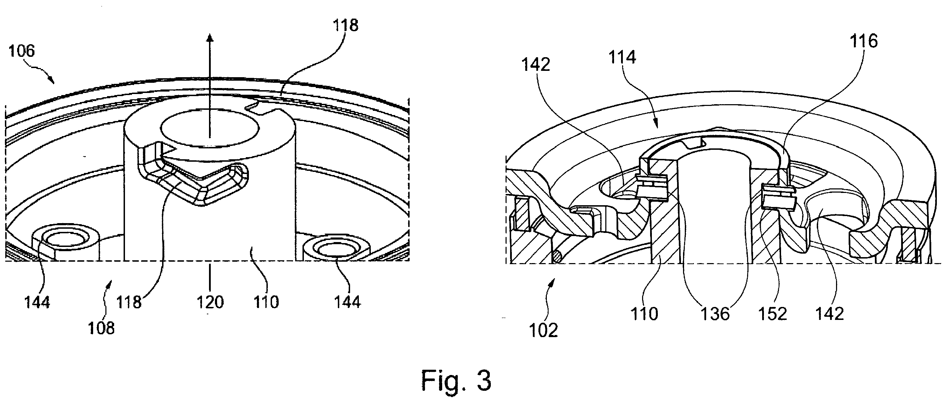

**Fig. 3** illustrates schematic partial views of an air treatment device 102 of the filter assembly according to the present invention in an unassembled state (the left panel in the figure) and an assembled state (in the right panel).

In this embodiment the guiding element 118, i.e. the two grooved surfaces, is (are) formed on the outer wall surface of the central wall 110 of the air treatment device 104 (in **Fig. 3** one of the grooved surfaces is partially visible).

In the assembled state as shown in **Fig. 3** (the right panel), the filter assembly further comprises a fixing element for locking relative movements of the flange neck portion 114 of the air dryer cartridge 102 with respect to the central portion 108 of the housing of the air treatment device 102.

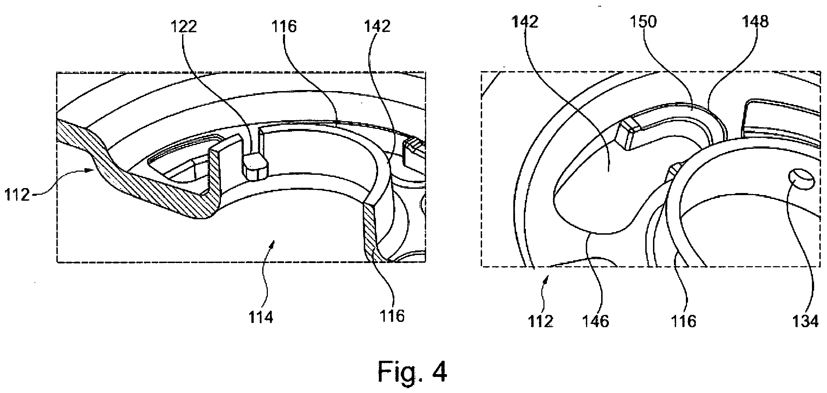

In particular, the central wall 110 includes at least two holes (e.g. blind-holes) 136 that are formed onto the outer surface thereof. Further, the flange wall 116 includes at least two through-holes 134 (see **Fig. 4**).

Advantageously, the fixing element comprises at least two pins 152. Each of the pins are configured to be inserted into the through-hole of the flange wall 116 and into the corresponding hole 136 of the central wall 110.

The pins 152 are further configured to be removably secured within the holes. In this way it is possible to further secure the flange neck portion 104 onto the central wall of the air treatment device 102.

In addition, the flange base portion 112 of the air dryer cartridge further comprises a plurality of openings 142 that are configured to be engaged with a plurality of pin elements 144 of the housing of the air treatment device (see **Fig. 3****,** the left panel) when mounting the flange neck portion onto the central portion of the housing. This in turn provides for a simple and time-effective approach to fix the air dryer cartridge onto the air treatment device.

In particular, the pin elements (or securing elements) include for example, a pin, a threaded pin, a screw or a nail.

**Fig. 4** shows schematic partial views of the flange neck portion 114 of a filter assembly according to the present invention.

In particular, the filter assembly further comprises a tab element 122 that is included in the flange neck portion 114. The tab element 122 is configured to move or to slide on the guiding element 118.

In particular, the tab element 122 comprises at least two projections that are arranged around the central axis 120 of the filter assembly. The projections of the tab element 122 are projecting inwardly from the inner neck surface.

The projections are advantageously configured to slide or to move on the corresponding grooved surfaces of the guiding element, when moving the air dryer cartridge onto the air treatment device. This in turn provides an easy and precise assembling of the filter assembly.

The **Fig. 4** further shows that one of the plurality of openings 142 formed on the flange base portion 112. Each of the openings define a curved opening (e.g. an arc-shaped recess) on the flange base portion 112 and include a first end 146 and a second end 148.

In particular, the second end of each opening of the plurality of openings 142 comprises a thickened contour 150. The thickened contour 150 advantageously serves the purpose of contacting the corresponding pin element 144 of the air treatment device 102 which in turn results in a better engagement and an easy fixation of the air dryer cartridge onto the air treatment device.

The contour 150 is for example formed in the shape of a horseshoe.

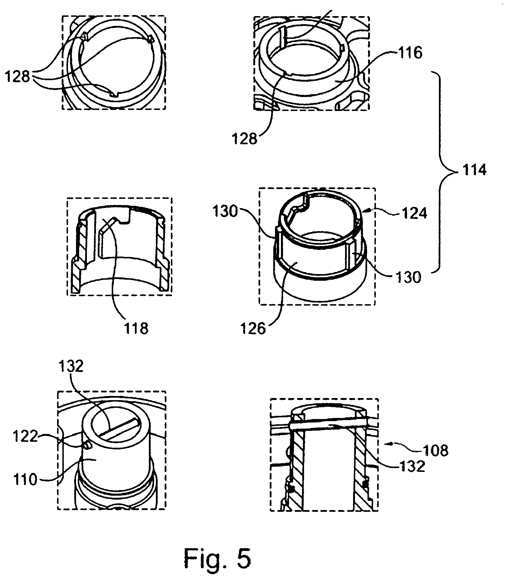

**Fig. 5** illustrates a schematic partial exploded-view of a flange neck portion 114 and a central wall 110 of a filter assembly according to the present invention.

In particular, the flange neck portion 114 further comprises an insert element 124. The insert element 124 includes an insert wall 126 that is configured to be fitted within the flange wall 116, wherein the insert wall 126 defines an insert inner surface and an insert outer surface.

The insert outer surface is configured to be connected to the inner neck surface of the flange wall 116, and the insert inner surface is configured to be engaged with the outer wall surface of the central wall 110.

In particular, the inner surface of the flange wall 116 comprises a plurality of grooved channels 128 configured to receive a plurality of projected channels 130 included on the insert outer surface.

The plurality of the grooved channels 128 and the plurality of projected channels 130 are arranged around the central axis of the filter assembly. The channels 128, 130 extend longitudinally in a direction in parallel to the central axis.

The insert element advantageously is integrated onto the flange wall in a reliable and easy manner without using mechanical tools.

**Fig. 5** further shows that the guiding element 118 is included on the insert inner surface of the insert wall 126.

Advantageously, the tab element 122 i.e., the projections thereof, is (are) formed by a pin 132 that is configured to extend through two through-holes onto opposite sides of the central wall 110. The pin 132 is configured to be removably secured within the through-holes with its ends projecting from the outer surface of the central wall 110.

In this way, when the air dryer cartridge is mounted onto the air treatment device, the projection of the tab element 122 are engaged with the grooved surfaces of the guiding element 118 on the insert wall 126, thereby facilitating a uniform movement of the flange neck portion onto the central wall of the air treatment device.

Similarly, when the guiding element 118 is formed on the inner neck surface of the flange wall 116 as shown in **Fig. 2****,** the tab element 122 is provided by the pin 132 arranged within the two through-holes of the central wall 110. The two ends of the pin 132 projecting outwardly from the outer surface of the central wall 110. For example, the at least two through-holes are symmetrically arranged with respect to the central axis 120.

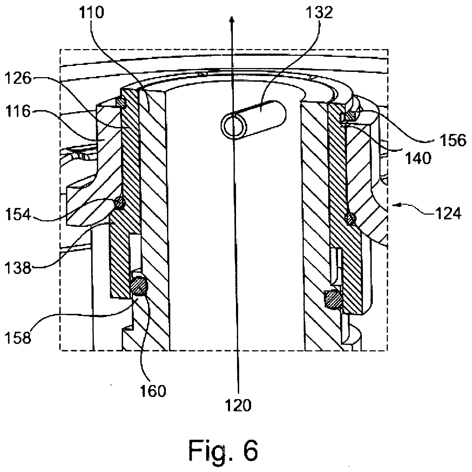

**Fig. 6** shows a schematic view of the filter assembly in an assembled state.

The insert element 124 of the flange neck portion 114. The insert outer surface of the insert wall 126 is connected with the inner surface of the flange wall 116 via the grooved channels 128 and the corresponding projected channels 130. The insert inner surface of the insert wall 126 is engaged with the outer surface of the central wall via the tab element 122, i.e. the projected ends thereof.

Advantageously, the air dryer cartridge 102 is reliably mounted onto the air treatment device and no excess or unbalanced loads are created in the filter assembly during the assembling process. In addition, the filter assembly can easily be disassembled as the tab element is guided on the guiding surfaces of the guiding element.

In particular, the insert wall 126 comprises a first circumferential shoulder 138 that is configured to receive a first sealing element 154, e.g. a sealing ring or an O-ring, on the insert outer surface.

The insert wall 126 further comprises a second circumferential shoulder 140 that is configured to receive a fixing element 156, e.g. a Seeger ring, on the insert outer surface. Advantageously, the fixing element 156 serves the purpose of fixing or securing the position of the insert element 124 onto the flange wall 116.

Further, the central wall 110 comprises a third circumferential shoulder 158 that is configured to receive a second sealing element 160 on the outer wall surface thereof.

### REFERENCE NUMERALS

- 100: a filter assembly
- 102: an air dryer cartridge
- 104: an air treatment device,
- 106: a peripheral portion
- 108: a central portion
- 110: a central wall
- 112: a flange base portion
- 114: a flange neck portion
- 116: a flange wall
- 118: a guiding element
- 120: a central axis
- 122: a tab element
- 124: an insert element
- 126: an insert wall
- 128: a plurality of grooved channels
- 130: a plurality of projected channels
- 132: a pin
- 134: through-holes on the flange wall
- 136: holes on the central wall
- 138: a first circumferential shoulder
- 140: a second circumferential shoulder
- 142: a plurality of openings
- 144: a plurality of pin elements
- 146: a first end of an opening of the plurality of openings
- 148: a second end of an opening of the plurality of openings
- 150: a contour
- 152: pins of a fixing element
- 154: a first sealing element on the insert wall
- 156: a fixing element on the insert wall
- 158: a third circumferential shoulder
- 160: a second sealing element on the central wall

## Claims

1. A filter assembly (100) for a compressed air treatment system of a vehicle, comprising:
an air dryer cartridge (102) configured to be removably secured onto an air treatment device,
the air treatment device (104) comprising a housing including a peripheral portion and a central portion, wherein the central portion includes a central wall (110) defining an outer wall surface,
the air dryer cartridge (102) comprising a flange base portion (112) and a flange neck portion (114), wherein the flange neck portion (114) includes a flange wall (116) extending from the flange base portion (112) and defining an inner neck surface,
the flange neck portion (114) being configured to be mounted onto the central portion (108) of the housing of the air treatment device such that the inner neck surface faces towards the outer wall surface of the central wall (110),
the filter assembly further comprising a guiding element that is included in the flange neck portion (114) of the air dryer cartridge (102) or on the central wall (110) of the air treatment device, wherein the guiding element (118) is configured to guide the flange neck portion (114) onto the central wall (110) of the air treatment device up to a defined end position.

2. The filter assembly (100) for a compressed air treatment system of a vehicle according to claim 1,
**characterized in that**
the filter assembly further comprises a tab element (122) included on the central wall (110) or in the flange neck portion (114), wherein the tab element (122) is configured to engage with the guiding element (118).

3. The filter assembly (100) for a compressed air treatment system of a vehicle according to claims 1 or 2,
**characterized in that**
the guiding element (118) comprises at least two grooved surfaces that are arranged around a central axis (120) of the filter assembly.

4. The filter assembly (100) for a compressed air treatment system of a vehicle according to claim 3,
**characterized in that**
the tab element (122) comprises at least two projections that are arranged around the central axis (120) of the filter assembly and are configured to engage with the corresponding grooved surfaces of the guiding element.

5. The filter assembly (100) for a compressed air treatment system of a vehicle according any of the preceding claims,
**characterized in that**
the flange neck portion (114) further comprises an insert element including an insert wall (126) that is configured to be fitted within the flange wall of the flange neck portion (114), wherein the insert wall (126) defines an insert inner surface and an insert outer surface, the insert outer surface being configured to be connected to the inner neck surface of the flange wall, and the insert inner surface being configured to be engaged with the outer wall surface of the central wall (110).

6. The filter assembly (100) for a compressed air treatment system of a vehicle according to claims 5,
**characterized in that**
the inner surface of the flange wall (116) comprises a plurality of grooved channels (128) configured to receive a plurality of projected channels (130) included on the insert outer surface, wherein the plurality of the grooved channels (128) and the plurality of projected channels (130) are arranged around the central axis (120) of the filter assembly and extend in a direction in parallel thereto.

7. The filter assembly (100) for a compressed air treatment system of a vehicle according any of the preceding claims
**characterized in that**
the guiding element (118) is included on the inner neck surface of the flange wall, on the insert inner surface of the insert wall (126) or on the outer wall surface of the central wall (110).

8. The filter assembly (100) for a compressed air treatment system of a vehicle according to claim 7,
**characterized in that**
the guiding element (118) is included on the inner neck surface of the flange wall or on the insert inner surface of the insert wall, and **that** the tab element (122) is formed by a pin (132) that is configured to extend through two through-holes onto opposite sides of the central wall (110) of the air treatment device, wherein the tab element (122) is configured to be removably secured within the through-holes with its ends projecting from the outer surface of the central wall (110).

9. The filter assembly (100) for a compressed air treatment system of a vehicle according to claim 7,
**characterized in that**
the guiding element (118) is included on the outer wall surface of the central wall (110), and **that**
the tab element (122) is formed on the inner surface of the flange wall (116), preferably the at least two projections of the tab element are projecting inwardly from the inner neck surface of the flange wall (116).

10. The filter assembly (100) for a compressed air treatment system of a vehicle according to claim 9,
**characterized in that**
the filter assembly further comprises a fixing element for locking relative movements of the flange neck portion (114) of the air dryer cartridge (102) with respect to the central portion of the air treatment device.

11. The filter assembly (100) for a compressed air treatment system of a vehicle according to claim 10,
**characterized in that**
the central wall (110) of the air treatment device includes at least two holes (136) that are formed onto the outer surface of the central wall (110), and the flange wall (116) of the air dryer cartridge (102) includes at least two through-holes (134) that are formed onto the flange wall (116), and **that** the fixing element comprises at least two pins (152), each being configured to be inserted into one through-hole of the flange wall and a corresponding hole of the central wall (110), wherein the at least two pins (152) are configured to removably secured in the holes of the flange wall and the central wall.

12. The filter assembly (100) for a compressed air treatment system of a vehicle according to any of the preceding claims,
**characterized in that**
the flange base portion (112) comprises a plurality of openings configured to be engaged with a corresponding plurality of pin elements (144) that are included in the housing of the air treatment device when mounting the flange neck portion (114) onto the central portion of the housing,.

13. The filter assembly (100) for a compressed air treatment system of a vehicle according to claim 12,
**characterized in that**
the plurality of openings, each define a curved opening on the flange base portion (112) having a first end (146) and a second end (148), wherein the second end (148) comprises a thickened contour (150) for contacting with the corresponding pin element of the air treatment device.

14. The filter assembly (100) for a compressed air treatment system of a vehicle according to claims 7 or 8,
**characterized in that**
the insert wall (126) comprises a first circumferential shoulder (138) configured to receive a first sealing element (154) on the outer insert surface.

15. The filter assembly for a compressed air treatment system of a vehicle according to claim 14,
**characterized in that**
the insert wall (126) further comprises a second circumferential shoulder (140) configured to receive a fixing element (156) on the outer insert surface.

16. The filter assembly (100) for a compressed air treatment system of a vehicle according to any claims 15,
**characterized in that**
the central wall (110) of the air treatment device comprises a third circumferential shoulder (158)configured to receive a second sealing element (160) on the outer wall surface.
